# EUROPEAN PATENT APPLICATION

(11) **EP 2 645 796 A1**
(43) Date of publication of application: **02.10.2013**
(21) Application number: 11843834.0
(22) Date of filing: 24.10.2011
(51) Int. Cl.: H04W 72/08, H04W 16/32, H04W 84/10

(54) **BASE STATION AND METHOD**

(30) Priority: 26.11.2010 JP 2010263948
(71) Applicant: NTT DOCOMO, Inc., Chiyoda-ku Tokyo 100-6150 (JP)
(72) Inventor: OOKUBO, Naoto, Tokyo 100-6150 (JP); KIYOSHIMA, Kohei, Tokyo 100-6150 (JP); ISHII, Hiroyuki, Tokyo 100-6150 (JP); ABETA, Sadayuki, Tokyo 100-6150 (JP); OKAMOTO, Takeshi, Tokyo 100-6150 (JP)
(74) Representative: HOFFMANN EITLE
(86) International application number: PCT/JP2011/074423
(87) International publication number: WO 2012/070345

(57) **Abstract**

A base station that performs radio communication with a mobile station includes an index calculation unit that calculates an index representing interference in a frequency band, wherein the frequency band is to be utilized by a different base station; a frequency band selection unit that selects the frequency band based on the index calculated by the index calculation unit, wherein, in the frequency band, the interference is less than or equal to a predetermined threshold value; and a communication unit that performs the radio communication with the mobile station in the frequency band selected by the frequency band selection unit.

## Description

### TECHNICAL FIELD

The present invention relates to a radio communication system.

### BACKGROUND ART

Technical specifications of Long Term Evolution (LTE) have been developed by the 3rd Generation Partnership Project (3GPP), which is the standardization organization of the Wideband-Code Division Multiple Access (W-CDMA). LTE is a standard that is further evolved from the High Speed Packet Access (HSPA), which is evolved technology of the W-CDMA. LTE provides high-speed communications, where a downlink transmission rate of 100 Mbps or more is achieved, and an uplink transmission rate of 50 Mbps or more is achieved. LTE improves latency and spectral efficiency.

LTE utilizes a frequency band which is the same as that of 3G. A bandwidth can be selected and utilized from 1.4 MHz, 3 MHz, 5 MHz, 10 MHz, 15 MHz, and 20 MHz.

For LTE, similar to 3G, it is considered to provide a micro base station as a method of establishing a communication area in a home or in a small store.

For example, a femto base station (which is referred to as a "femto eNodeB" hereinafter) is placed on a steel tower or on a roof of a building, besides in a home or a small store. The femto eNodeB has a limited call area having a radius of approximately several tens of meters.

### RELATED ART DOCUMENT

### [NON-PATENT DOCUMENT]

Non-Patent Document 1: TS25.141 V9.5.0 (Base Station (BS) conformance testing (FDD)) 2010 09

### SUMMARY OF THE INVENTION

### PROBLEM TO BE SOLVED BY THE INVENTION

As described above, LTE utilizes the frequency band which is the same as that of 3G, and the bandwidth can be selected and utilized from 1.4 MHz, 3 MHz, 5 MHz, 15 MHz, and 20 MHz.

For example, suppose that a cell that is covered by a femto eNodeB in a manner like a hot spot (hereinafter, which is referred to as the "femtocell") is to be introduced in an area where another cell which is covered by a normal base station (hereinafter, which is referred to as the "macrocell") is formed.

With regard to reducing radio frequency interference between the femtocell and the macrocell, ideally, it is effective to separate a frequency band which is utilized by the femtocell from a frequency band which is utilized by the macrocell.

However, a frequency band which is utilized by the femtocell may be provided in a portion of a frequency band which is utilized by the macrocell. For the case where the frequency band which is utilized by the femtocell is provided in the portion of the frequency band which is utilized by the macrocell, the resources utilized by the macrocell are reduced. Since the resources utilized by the macrocell are reduced, the capacity of the macrocell may be reduced.

Furthermore, the maximum bandwidth of the macrocell and the maximum bandwidth of the femtocell may not be utilized. Since the maximum bandwidth may not be utilized, the peak rate may not be achieved.

The present invention is achieved in view of the above-described problem. An object of the present invention is to improve a transmission rate, while reducing interference between base stations that utilize corresponding overlapped frequencies.

### MEANS FOR SOLVING THE PROBLEM

According to an aspect of the present invention, the base station is a base station that performs radio communication with a mobile station. The base station includes an index calculation unit that calculates an index representing interference in a frequency band, wherein the frequency band is to be utilized by a different base station; a frequency band selection unit that selects the frequency band based on the index calculated by the index calculation unit, wherein, in the frequency band, the interference is less than or equal to a predetermined threshold value; and a communication unit that performs radio communication with the mobile station in the frequency band selected by the frequency band selection unit.

According to another aspect of the present invention, the method is a method of a base station that performs radio communication with a mobile station. The method includes an index calculation step of calculating an index representing interference in a frequency band to be utilized by a different base station; a frequency band selection step of selecting the frequency band based on the index calculated by the index calculation step, wherein, in the frequency band, the interference is less than a predetermined threshold value; and a communication step of performing radio communication with the mobile station in the frequency band selected by the frequency band selection unit.

### EFFECT OF THE PRESENT INVENTION

According to the disclosed embodiment, a transmission rate can be improved, while reducing interference between base stations that utilize corresponding overlapped frequencies.

### BRIEF DESCRIPTION OF THE DRAWINGS

FIG. 1 is a diagram showing an example of a system according to an embodiment;
FIG. 2 is a diagram showing an example of allocation of frequencies;
FIG. 3 is a functional block diagram showing an example of an eNodeB according to the embodiment;
FIG. 4 is a flowchart showing an example of operations of the eNodeB according to the embodiment; and
FIG. 5 is a diagram showing an example where Carrier Aggregation is applied in the eNodeB according to the embodiment.

### EMBODIMENTS FOR CARRYING OUT THE INVENTION

Hereinafter, a mode of carrying out the present invention is explained based on an embodiment below, while referring to the figures. In all the figures for illustrating the embodiment, the same symbol is used for entities having the same function, and thereby duplicated explanations are omitted.

### <Embodiment>

### <System>

There is explained an environment to which a small eNodeB according to the embodiment and an eNodeB are applied.

The environment to which the small eNodeB and the eNodeB are applied may be an environment where plural mobile communication systems coexist. The mobile communication systems may include an LTE system. Additionally, the next generation radio communication system of LTE, e.g., LTE-Advanced (LTE Rel. 10 and beyond) may be included.

An area covered by an eNodeB includes one or more cells. Among the cells, there are cells in which radio communications can be performed in the same frequency band. The cells in which the radio communications can be performed in the same frequency band may be referred to as a "frequency layer."

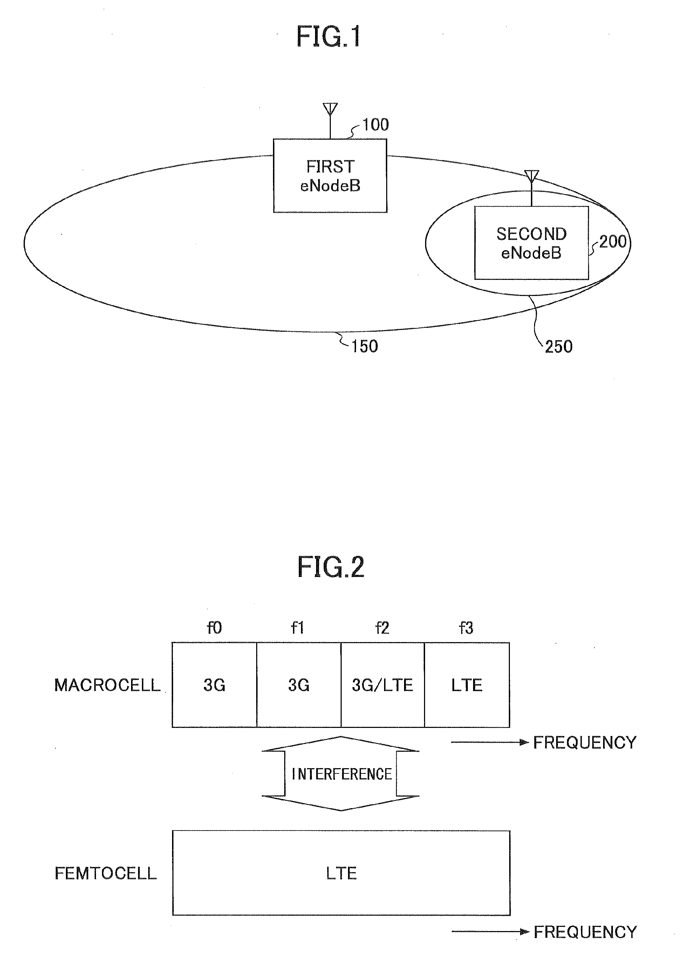

FIG. 1 shows an example of an environment to which the small eNodeB and the eNodeB are applied. FIG. 1 shows, as an example, a first eNodeB 100 as an eNodeB in accordance with the LTE scheme, and an area covered by the first eNodeB 100. The area includes a cell 150 where radio communication with user equipment (UE: User Equipment) is enabled. In the area 150, a second eNodeB 200 is installed as the small eNodeB. The second eNodeB 200 may include a femto eNodeB, and an eNodeB that covers a pico cell (a pico eNodeB). In the embodiment, as an example, a case is explained where the second eNodeB 200 is a femto eNodeB.

From a perspective of covering a range difficult for radio waves from the first eNodeB 100 to reach, the location where the second eNodeB 200 is installed can be within the area covered by the first eNodeB 100. For example, it may be installed indoors. Specifically, it may be installed inside a building, or inside a home or a small store. Further, it may be installed outdoors. Specifically, it may be installed on a steel tower or on a roof of a building. At least a portion of the area covered by the second eNodeB 200 may overlap the area covered by the first eNodeB 100. By overlapping at least a portion of the area covered by the second eNodeB 200 with the area covered by the first eNodeB 100, a blind zone may be reduced. The second eNodeB 200 covers the area 250. The user equipment (not shown) is located in the area 250. The user equipment can perform radio communication through the second eNodeB 200.

The first eNodeB 100 and the second eNodeB 200 are connected to a mobility management entity (MME, or a switching center) (not shown). The MME is connected to a core network (not shown). The user equipment performs communication with the first eNodeB 100 or with the second eNodeB 200 in accordance with the LTE scheme. The first eNodeB 100 and the second eNodeB 200 may be connected to an evolved packet core (EPC: Evolved Packet Core) (not shown).

In the embodiment, as an example, a case is explained where a frequency band utilized by the first eNodeB 100 and a frequency band utilized by the second eNodeB 200 are the same. In other words, the case is explained where the frequency bands allocated to the systems are the same. It can be applied to a case where the frequency band utilized by the first eNodeB 100 overlaps a portion of the frequency band utilized by the second eNodeB 200.

### <First eNodeB>

The first eNodeB 100 performs, at least, operation in a first mobile communication system (LTE). The first eNodeB 100 may be referred to as an "access point AP." The first eNodeB 100 may also perform processes of a second mobile communication system (3G), besides that of the first mobile communication system (LTE). The first eNodeB (eNB) 100 in the first mobile communication system (LTE) performs radio resource management, IP header compression and encryption, routing of user plane data, and scheduling of a paging message and broadcast information, for example. The cell covered by the first eNodeB 100 is also referred to as a "macrocell."

The system to which the embodiment is applied is not limited to the LTE system and the UTRA system. It may be another system. For example, the present invention can be applied to the GERAN (GSM) system, the CDMA2000 system, the UMTS system, and a fourth generation mobile communication system.

### <Second eNodeB>

The second eNodeB 200 controls frequency resources to be utilized by the second eNodeB 200, based on whether communication is performed by the macrocell. Alternatively, the second eNodeB 200 may control the frequency resources to be utilized by the second eNodeB 200, based on whether there is a possibility that communication is performed by the macrocell. The determination as to whether the communication is performed by the macrocell is made based on the Active Metric. For example, the Active Metric is an index representing interference with a frequency band which is utilized by another eNodeB. For example, as the Active Metrics, a channel quality indicator (CQI), an uplink interference level, and reception levels of pilot signals from neighboring cells may be utilized. As the Active Metric, an index other than the CQI, the uplink interference level, and the reception levels of the pilot signals from the neighboring cells may be utilized.

When the second eNodeB 200 determines that the communication is performed by the macrocell, and that the effect of the interference caused by the macrocell is large, the second eNodeB 200 avoids allocation of resources of the frequency band, in which the communication is performed by the macrocell.

Even if the second eNodeB 200 determines that the communication is performed by the macrocell, when the second eNodeB 200 determines that the effect of the interference caused by the macrocell is small, the second eNodeB 200 does not avoid allocation of the resources of the frequency band, in which the communication is performed by the macrocell. The allocation of the radio frequency resources is performed in a frequency band, which includes the frequency band where the communication is performed by the macrocell.

When the second eNodeB 200 determines that no communications are performed by the macrocell, the second eNodeB 200 performs allocation of resources in a frequency band, which can be utilized by the second eNodeB 200.

FIG. 2 shows interference between the macrocell and the femtocell.

For example, in the macrocell, 20 MHz of the frequency band is divided into pieces. A predetermined system is operated in each of the sub-bands. According to FIG. 2, for example, 20 MHz of an LTE system band is divided into four pieces, thereby forming the sub-bands indicated as f0, f1, f2, and f3. In the sub-bands, 3G systems are operated in f0 and f1, a 3G system and an LTE system are operated in f2, and an LTE system is operated in f3. In this situation, the second eNodeB 200 selects, as a frequency band to be utilized by the second eNodeB 200, a frequency band where an effect of the interference is less than or equal to a predetermined threshold value. For example, when the second eNodeB 200 determines that the interference is greater than the predetermined threshold value in f0 and f1, the second eNodeB 200 determines that f0 and f1 are utilized, and the second eNodeB 200 selects another frequency band. Further, for example, when the second eNodeB 200 determines that the interference is less than or equal to the predetermined threshold value in f2 and f3, the second eNodeB 200 determines that f2 and f3 are not utilized, or determines that the interference is allowable even if f2 and f3 are utilized, and the second eNodeB 200 selects the frequency band. Further, for example, when the eNodeB 200 determines that the interference is less than or equal to the predetermined threshold value in f0 - f3, the eNodeB 200 determines that f0 - f3 are not utilized, or determines that the interference is allowable even if f0 - f3 are utilized, and the eNodeB 200 selects the frequency band.

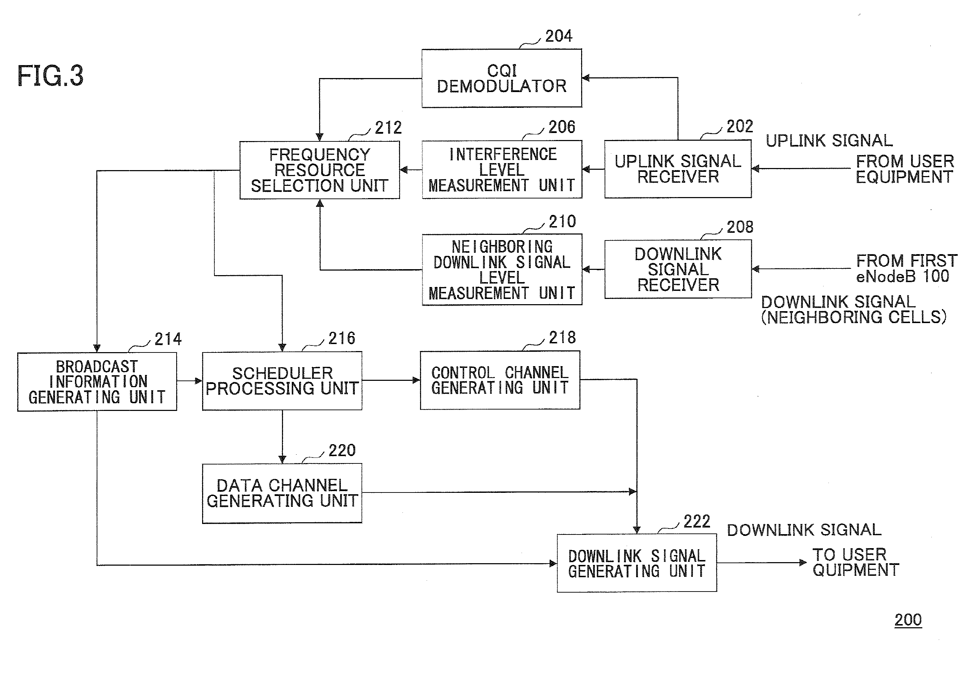

FIG. 3 is a functional block diagram showing an example of the second eNodeB 200.

The second eNodeB 200 includes an uplink signal receiver 202. The uplink signal receiver 202 receives an uplink signal from user equipment. The uplink signal receiver 202 inputs the uplink signal from the user equipment to a CQI demodulator 204 and an interference level measurement unit 206.

The second eNodeB 200 includes the CQI demodulator 204. The CQI demodulator 204 is connected to the uplink signal receiver 202. The CQI demodulator 204 demodulates a CQI included in an uplink signal from the uplink signal receiver 202. The CQI demodulator 204 inputs the CQI to the frequency resource selection unit 212.

The second eNodeB 200 includes the interference level measurement unit 206. The interference level measurement unit 206 is connected to the uplink signal receiver 202. The interference level measurement unit 206 measures an interference level, based on an uplink signal from the uplink signal receiver 202. For example, the interference level measurement unit 206 measures interference levels of uplinks in corresponding frequency bands. For example, interference levels of uplinks in a frequency band, which is an integral multiple of an LTE operating frequency band, can be measured. Here, the operating frequency band may be a frequency band defined by dividing a system bandwidth. For the example of FIG. 2, an interference level can be measured for each 5 MHz. The interference level measurement unit 206 inputs the interference levels of the uplinks in the corresponding frequency bands to the frequency resource selection unit 212.

The second eNodeB 200 includes a downlink signal receiver 208. The downlink signal receiver 208 receives a downlink signal from the first eNodeB 100. The downlink signal may include a pilot signal. The downlink signal receiver 208 inputs the downlink signal from the first eNodeB 100 to a neighboring downlink signal level measurement unit 210.

The second eNodeB 200 includes the neighboring downlink signal level measurement unit 210. The neighboring downlink signal level measurement unit 210 is connected to the downlink signal receiver 208. The neighboring downlink signal level measurement unit 210 measures a reception level of the downlink signal, based on the downlink signal from the downlink signal receiver 208. For example, the neighboring downlink signal level measurement unit 210 measures reception levels of the downlink signals in the corresponding frequency bands. For example, reception levels of downlink signals in a frequency band, which is an integral multiple of the LTE operating frequency band, can be measured. Here, the operating frequency band may be a frequency band defined by dividing a system bandwidth. For the example of FIG. 2, an interference level can be measured for each 5 MHz. Specifically, for a case where neighboring cells include a 3G macrocell, a quality level of a common pilot channel (CPICH: Common PIlot CHannel) may be measured, or the received signal code power (RSCP: Received Signal Code Power) may be measured. Further, for a case where the neighboring cells include an LTE macrocell, the reference signal received power (RSRP: Reference Signal Received Power) of a reference signal may be measured. The neighboring downlink signal level measurement unit 210 may measure reception levels of downlink signals of all cells corresponding to cell IDs. For example, by searching for the cell IDs, the reception levels may be measured in accordance with a brute force approach. The neighboring downlink signal level measurement unit 210 inputs the reception level of the downlink signal to the frequency resource selection unit 212.

The second eNodeB 200 includes the frequency resource selection unit 212. The frequency resource selection unit 212 is connected to the CQI demodulator 204, the interference level measurement unit 206, and the neighboring downlink signal level measurement unit 210. The frequency resource selection unit 212 selects a frequency band to be utilized by the second eNodeB 200, at least based on one of the CQI to be input from the CQI demodulator 204, the interference level to be input from the interference level measurement unit 206, and the downlink signal level to be input by the neighboring downlink signal level measurement unit 210. For example, the frequency resource selection unit 208 may select the frequency band to be used by the second eNodeB 200 at every semi-static period of approximately one day, or at every dynamic period which is shorter than the semi-static period. Further, both of them may be concurrently used. By selecting the frequency band to be utilized by the second eNodeB 200 at every dynamic period, the second eNodeB 200 can respond to a case where variation of the interference is large. Hereinafter, the frequency band to be utilized by the second eNodeB 200 which is selected at every semi-static period is referred to as the "first frequency band." The frequency band to be utilized by the second eNodeB 200 which is selected at every dynamic period is referred to as the "second frequency band." For example, for each control period in which the second eNodeB 200 selects user equipment to which frequency resources are to be allocated, the second frequency band to be utilized by the second eNodeB 200 may be selected.

From a perspective of reducing an effect caused by the change of the system bandwidth, it is preferable that the process of selecting the frequency band to be utilized by the second eNodeB 200 at the semi-static period be performed during a time period where a number of connected mobile stations is small. When the frequency band to be utilized by the second eNodeB 200 is selected at the semi-static period, the frequency band to be utilized may be changed. When the frequency band to be utilized is changed, a transmission frequency band of the broadcast information is also changed. Since the transmission frequency band may be changed, connection of the mobile station may be disconnected.

For a case where both of them are concurrently utilized, for example, the first frequency band to be utilized by the second eNodeB 200 may be selected at the semi-static period, and subsequently the second frequency band which is actually to be utilized may be selected from the first frequency band, while maintaining the first frequency band. The process of selecting the second frequency band may be executed as a frequency scheduling process.

The frequency resource selection unit 212 selects the frequency band to be utilized by the second eNodeB 200 based on the CQI to be input by the CQI demodulator 204. For example, when the CQI to be input by the CQI demodulator 206 is less than or equal to a predetermined CQI threshold value, the frequency resource selection unit 208 determines that the frequency band corresponding to the CQI is available. For example, in a process of determining whether the frequency band is available, a determination is made, for each of the frequency bands defined by dividing the system bandwidth, as to whether the frequency band is available by using a sub-band CQI to be reported from a mobile station. For example, the frequency band defined by dividing the system bandwidth can be the LTE operating frequency band.

Further, when the interference level to be input by the interference level measurement unit 206 is less than or equal to a predetermined interference threshold value, the frequency resource selection unit 212 determines that the frequency band corresponding to the interference level is available.

Further, when the signal level to be input by the neighboring downlink signal level measurement unit 210 is less than or equal to a predetermined signal level threshold value, the frequency resource selection unit 212 determines that the frequency band corresponding to the signal level is available.

The frequency resource selection unit 212 inputs information representing the frequency band which is determined to be available for the second eNodeB 200 (hereinafter, which is referred to as the "available frequency band information") to a broadcast information generating unit 214 and a scheduler processing unit 216. The available frequency band information includes information representing the first frequency band or information representing the second frequency band.

The second eNodeB 200 includes the broadcast information generating unit 214. The broadcast information generating unit 214 is connected to the frequency resource selection unit 212. The broadcast information generating unit 214 generates broadcast information including the available frequency band information to be input by the frequency resource selection unit 212. The broadcast information generating unit 214 inputs the broadcast information to the scheduler processing unit 216 and a downlink signal generating unit.

The second eNodeB 200 includes the scheduler processing unit 216. The scheduler processing unit 216 is connected to the frequency resource selection unit 212 and the broadcast information generating unit 214. The broadcast information generating unit 214 selects a mobile station to which frequency resources are to be allocated, based on the available frequency band information to be input by the frequency resource selection unit 212.

For example, the scheduler processing unit 216 selects the mobile station to which the frequency blocks included in the first frequency band are to be allocated, based on the information representing the first frequency band included in the available frequency band information. Subsequently, when the information representing the second frequency band is input as the available frequency band information, a mobile station is selected, to which frequency blocks included in the second frequency band are to be allocated in the first frequency band, while maintaining the first frequency band.

Further, for example, the scheduler processing unit 216 selects a mobile station to which frequency blocks included in the second frequency band are to be allocated, based on the information representing the second frequency band included in the available frequency band information.

Further, the scheduler processing unit 216 selects a frequency band which is to be allocated to the broadcast information to be input by the broadcast information generating unit 214.

The scheduler processing unit 216 inputs information representing frequency blocks and information representing a mobile station to a control channel generating unit 218 and a data channel generating unit 220. Here, the frequency blocks are to be allocated to the mobile station.

The second eNodeB 200 includes the control channel generating unit 218. The control channel generating unit 218 is connected to the scheduler processing unit 216. The control channel generating unit 218 generates a control channel for a mobile station, based on the information representing the frequency blocks to be input by the scheduler processing unit 216 and the information representing the mobile station to which the frequency resources are to be allocated. The control information generating unit 218 inputs the control channel to the downlink generating unit 222.

The second eNodeB 200 includes the data channel generating unit 220. The data channel generating unit 220 is connected to the scheduler processing unit 216. The data channel generating unit 220 generates a data channel for the mobile station, based on the information representing the frequency blocks to be input by the scheduler processing unit 216 and the information representing the mobile station to which the frequency blocks are to be allocated. The data channel generating unit 220 inputs the data channel to the downlink signal generating unit 222.

The second eNodeB 200 includes the downlink signal generating unit 222. The downlink signal generating unit 222 is connected to the broadcast information generating unit 214, the control channel generating unit 218, and the data channel generating unit 220. The downlink signal generating unit 222 generates a downlink signal. The downlink signal may include the broadcast information to be input by the broadcast information generating unit 214. The downlink signal may include the control channel to be input by the control channel generating unit 218. The downlink signal may include the data channel to be input by the data channel generating unit 220.

The downlink signal generated by the downlink signal generating unit 222 is transmitted to the mobile station. For example, the control channel is transmitted across the frequency band of the first frequency band or the second frequency band.

### <Operations of second eNodeB>

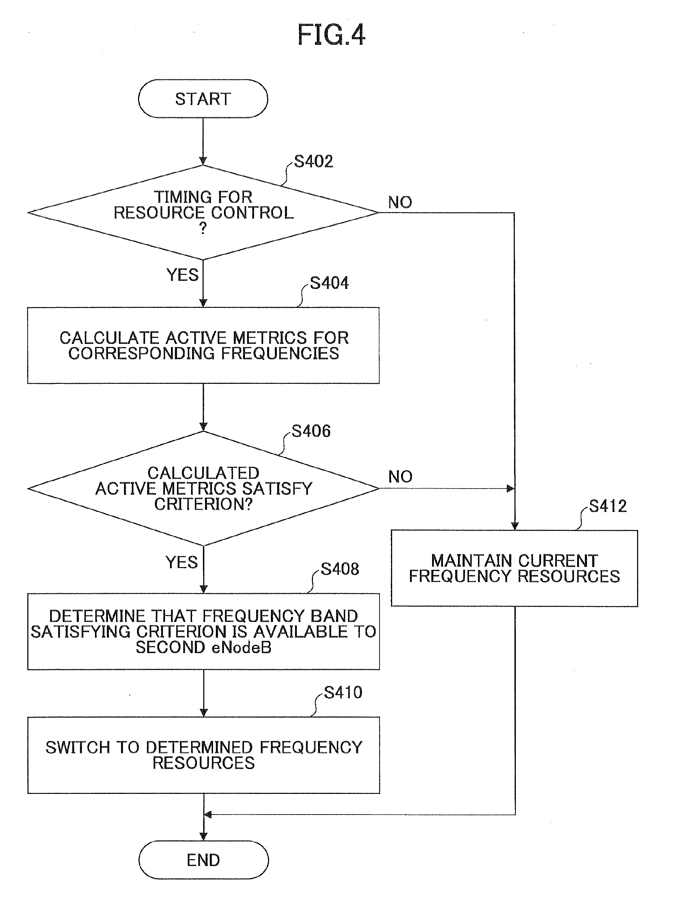

FIG. 4 is a flowchart showing an example of operations of the second eNodeB 200.

The second eNodeB 200 determines whether it is timing for resource control (step S402). For example, the frequency resource selection unit 212 determines whether it is the timing for the resource control in accordance with the period for selecting the frequency band to be utilized by the second eNodeB 200. The period for selecting the frequency band to be utilized by the second eNodeB 200 is to be determined in advance. The period includes the semi-static period and the dynamic period.

When the second eNodeB 200 determines that it is the timing for the resource control (step S402: YES), the second eNodeB 200 calculates active metrics for corresponding frequency bands (step S404). For example, the CQI demodulator 204 demodulates the CQI, the interference level measurement unit 206 measures an interference level, and the neighboring downlink signal level measurement unit 210 measures signal levels of neighboring cells.

The second eNodeB 200 determines whether the active metrics calculated at step S404 satisfy a specified threshold value. For example, the frequency resource selection unit 212 determines whether the CQI to be input from the CQI demodulator 204 is less than a predetermined CQI threshold value. Further, the frequency resource selection unit 212 determines whether the interference level input by the interference level measurement unit 206 is less than or equal to a predetermined interference level threshold value. Further, the frequency resource selection unit 212 determines whether the signal levels which are to be input by the neighboring downlink signal level measurement unit 210 are less than a predetermined signal level threshold value.

The second eNodeB 200 determines that the frequency bands, which are determined to satisfy the criterion at step S406, are available to the second eNodeB 200 (step S408). For example, the frequency resource selection unit 208 determines that a frequency band corresponding to the CQI is available, when the CQI to be input by the CQI demodulator 206 is less than or equal to the predetermined CQI threshold value. For example, the frequency resource selection unit 212 determines that a frequency band corresponding to the interference level is available, when the interference level to be input by the interference level measurement unit 206 is less than the interference level threshold value. For example, the frequency resource selection unit 212 determines that a frequency band corresponding to the signal level is available, when the signal level to be input by the neighboring downlink signal level measurement unit 210 is less than or equal to the signal level threshold value. From a perspective of improving reliability, it is preferable that the determination be made while combining the uplink interference level and the interference levels of the pilot signals from the neighboring cells. That is because the CQI is measured only in the operating frequency. When a determination is made based on the plural active metrics, an overlapped portion of frequency bands may be determined to be available, where the frequency bands are determined to be available based on the corresponding active metrics, or a frequency band may be determined to be available, where the frequency band is determined to be available based on at least one active metric. An available frequency may be determined based on a method other than the above-described methods.

The second eNodeB 200 switches a frequency band to be the frequency band which is determined to be available at step S408 (step S410). For example, the frequency resource selection unit 212 switches the frequency band to be the frequency band which is determined to be available at step S408.

When a determination is made that it is not the timing for the resource control at step S402 (step S402: NO), or when a determination is made that the active metrics which are calculated at step S406 do not satisfy the criterion (step S406: NO), the second eNodeB 200 maintains the current frequency resources.

According to the embodiment, the second eNodeB can adaptively select a frequency band to be used.

In the embodiment, the Carrier Aggregation (CA) may be applied. In the Carrier Aggregation, a wider bandwidth is achieved by combining plural frequency blocks, which are supported by the LTE Rel. 10 and which are referred to as "component carriers (CC)" of a frequency band.

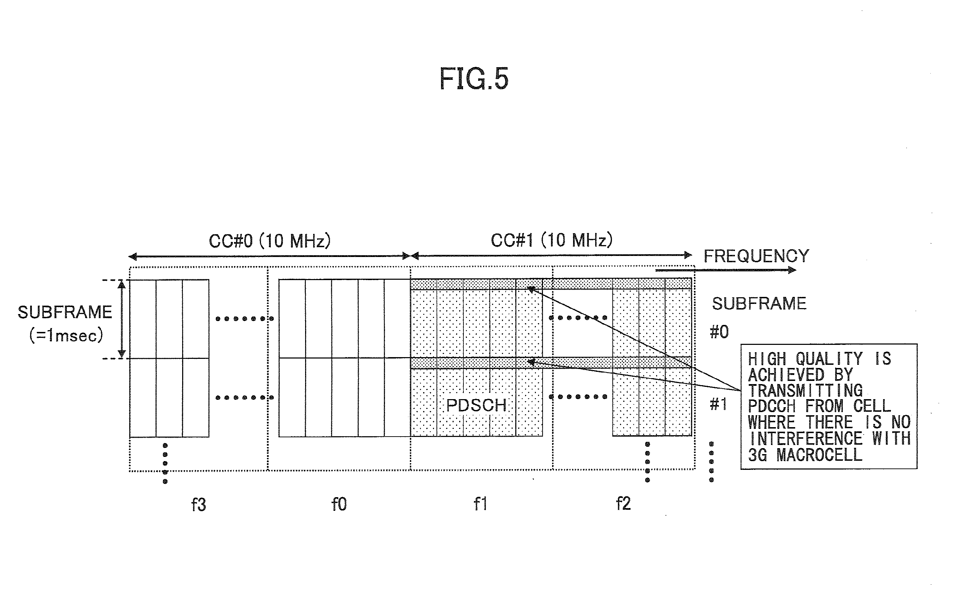

FIG. 5 shows an example where the Carrier Aggregation is applied.

For example, the CA may be applied by combining the CC#0 (10 MHz) and the CC#1 (10 MHz). The communication is performed by using both of the CCs (the CC#0 and the CC#1), when the 3G macro is not performing communication. A peak rate for a femto having a bandwidth of 20 MHz can be achieved by performing communication while using both the CCs. In other words, a determination is made as to whether the CA is applied, depending on the interference. Further, the physical downlink control channel (PDCCH) and the physical downlink shared control channel (PDSCH) may be transmitted by different component carriers.

According to the embodiment, allocation of the frequency resources can be optimally controlled, based on as to whether there is interference with the neighboring cells. Since the allocation of the frequency resources can be optimally controlled, a peak rate can be achieved, while enabling coexistence of the macrocell and the femtocell.

In the above-described embodiment, a case is explained where the macrocell and the femtocell utilize the same frequency bands. However, the embodiment is not limited to the case between the macrocell and the femtocell. For example, the embodiment can be applied to a case where at least a portion of an overlapped frequency band is utilized among cells, such as the macrocell, femtocell, the picocell, and a cell which will be developed in the future.

According to an embodiment of the present invention, the base station is a base station that performs radio communication with a mobile station. The base station includes an index calculation unit that calculates an index representing interference in a frequency band, wherein the frequency band is to be utilized by a different base station; a frequency band selection unit that selects the frequency band based on the index calculated by the index calculation unit, wherein, in the frequency band, the interference is less than or equal to a predetermined threshold value; and a communication unit that performs the radio communication with the mobile station in the frequency band selected by the frequency band selection unit.

Further, the index calculation unit may calculate a CQI based on an uplink signal to be transmitted by the mobile station, and the frequency band selection unit may select the frequency band, wherein, in the frequency band, the CQI calculated by the index calculation unit is less than or equal to a predetermined CQI threshold value.

Further, the index calculation unit may calculate a reception level based on a downlink signal from the different base station, and the frequency band selection unit may select the frequency band, wherein, in the frequency band, the reception level calculated by the index calculation unit is less than or equal to a predetermined reception level.

Further, the index calculation unit may calculate an interference level based on the uplink signal to be transmitted by the mobile station, and the frequency band selection unit may select the frequency band, wherein, in the frequency band, the interference level calculated by the index calculation unit is less than or equal to a predetermined interference level.

Further, the frequency band selection unit may select frequency bands at every predetermined period.

Further, the frequency band selection unit may select the frequency band to be used by the base station at every short period which is shorter than the predetermined period, among the frequency bands selected at the predetermined period.

Further, a scheduler processing unit may be included which selects the mobile station to which frequency resources are to be allocated in the frequency band selected by the frequency band selection unit.

Further, the communication unit may transmit a control channel across the frequency band selected by the frequency band selection unit.

According to the embodiment of the present invention, the method is a method of a base station that performs radio communication with a mobile station. The method includes an index calculation step of calculating an index representing interference in a frequency band, wherein the frequency band is to be utilized by a different base station; a frequency band selection step of selecting the frequency band based on the index calculated by the index calculation step, wherein, in the frequency band, the interference is less than or equal to a predetermined threshold value; and a communication step of performing the radio communication with the mobile station in the frequency band selected by the frequency band selection step.

For convenience of explanation, specific examples of numerical values are used in order to facilitate understanding of the invention. However, these numerical values are simply illustrative, and any other appropriate values may be used, except as indicated otherwise.

Hereinabove, the present invention is explained by referring to the specific embodiments. However, the embodiments are merely illustrative, and variations, modifications, alterations and substitutions could be conceived by those skilled in the art. For the convenience of explanation, the devices according to the embodiments of the present invention are explained by using functional block diagrams. However, these devices may be implemented in hardware, software, or combinations thereof. The present invention is not limited to the above-described embodiments, and various variations, modifications, alterations, substitutions and so on are included, without departing from the spirit of the present invention.

The present application claims priority based on Japanese Patent Application No. 2010-263948, filed on November 26, 2010, the entire contents of which are hereby incorporated by reference.

### LIST OF REFERENCE SYMBOLS

- 100:: First eNodeB
- 150:: Cell of the first eNodeB
- 200:: Second eNodeB
- 202:: Uplink signal receiver
- 204:: CQI demodulator
- 206:: Interference level measurement unit
- 208:: Downlink signal receiver
- 210:: Neighboring downlink signal level measurement unit
- 212:: Frequency resource selection unit
- 214:: Broadcast information generating unit
- 216:: Scheduler processing unit
- 218:: Control channel generating unit
- 220:: Data channel generating unit
- 222:: Downlink signal generating unit
- 250:: Cell of the second eNodeB

## Claims

1. A base station that performs radio communication with a mobile station, the base station comprising:
an index calculation unit that calculates an index representing interference in a frequency band, wherein the frequency band is to be utilized by a different base station;
a frequency band selection unit that selects the frequency band based on the index calculated by the index calculation unit, wherein, in the frequency band, the interference is less than or equal to a predetermined threshold value;
a communication unit that performs the radio communication with the mobile station in the frequency band selected by the frequency band selection unit.

2. The base station according to claim 1,
wherein the index calculation unit calculates a channel quality indicator (CQI) based on an uplink signal to be transmitted by the mobile station, and
wherein the frequency band selection unit selects the frequency band, whrein, in the frequency band, the CQI calculated by the index calculation unit is less than or equal to a predetermined CQI threshold value.

3. The base station according to claim 1,
wherein the index calculation unit calculates a reception level based on a downlink signal from the different base station; and
wherein the frequency band selection unit selects the frequency band, wherein, in the frequency band, the reception level calculated by the index calculation unit is less than or equal to a predetermined reception level.

4. The base station according to claim 1,
wherein the index calculation unit calculates an interference level based on the uplink signal to be transmitted by the mobile station, and
wherein the frequency band selection unit selects the frequency band, wherein, in the frequency band, the interference level calculated by the index calculation unit is less than or equal to a predetermined interference level.

5. The base station according to any one of claims 1 - 4,
wherein the frequency band selection unit selects frequency bands at every predetermined period.

6. The base station according to claim 5,
wherein the frequency band selection unit selects the frequency band to be used by the base station at every short period, the short period being shorter than the predetermined period, among the frequency bands selected at the predetermined period.

7. The base station according to claim 1, further comprising:
a scheduler processing unit that selects the mobile station to which frequency resources are to be allocated in the frequency band selected by the frequency band selection unit.

8. The base station according to claim 1,
wherein the communication unit transmits a control channel across the frequency band selected by the frequency band selection unit.

9. A method of a base station that performs radio communication with a mobile station, the method comprising:
an index calculation step of calculating an index representing interference in a frequency band, wherein the frequency band is to be utilized by a different base station;
a frequency band selection step of selecting the frequency band based on the index calculated by the index calculation unit, wherein, in the frequency band, the interference is less than or equal to a predetermined threshold value; and
a communication step of performing the radio communication with the mobile station in the frequency band selected by the frequency band selection step.
